# EUROPEAN PATENT APPLICATION

(11) **EP 4 757 427 A1**
(43) Date of publication of application: **10.06.2026**
(21) Application number: 23947121.2
(22) Date of filing: 02.08.2023
(51) Int. Cl.: H04W 48/20

(54) **COMMUNICATION METHOD, AND ACCESS POINT DEVICE AND COMMUNICATION SYSTEM**

(71) Applicant: Beijing Xiaomi Mobile Software Co., Ltd., Beijing 100085 (CN)
(72) Inventor: CHENG, Yajun, Beijing 100085 (CN)
(74) Representative: Stöckeler, Ferdinand
(86) International application number: PCT/CN2023/110810
(87) International publication number: WO 2025/025173

(57) **Abstract**

The embodiments of the present disclosure relate to a communication method, and an access point device and a communication system. The communication method comprises: a first access point (AP) device determining a first radio frame, wherein the first radio frame comprises first identification information, and the first identification information identifies information of multi-AP coordinated transmission scheduling; and sending the first radio frame. After negotiation of multi-AP coordinated transmission scheduling is completed, in a corresponding duration, it is unnecessary to repeatedly perform negotiation of a multi-AP coordinated operation between APs at each obtained transmission occasion, so as to reduce interference in multi-AP communication, thereby achieving the aim of reducing interference between cells, ensuring the quality of service for a user, improving a network communication rate, reducing latency, etc. A more rational communication resource configuration is realized by means of multi-AP coordinated cooperation, so as to improve access efficiency while ensuring communication quality, thereby realizing a better network performance.

## Description

### TECHNICAL FIELD

The present disclosure relates to the field of communication technologies, and in particular relates to a communication method, an access point device, and a communication system.

### BACKGROUND

Currently, researches on wireless fidelity (Wi-Fi) technologies include, for example, as ultra high reliability (UHR) technologies, with the vision of improving the reliability of wireless local area network (WLAN) connections, reducing the latency, improving the manageability, increasing the throughput at different signal-to-noise ratio (SNR) levels, reducing device-level power consumption and the like.

In the UHR technologies, the multiple access point device (M-AP, or multi-AP) coordination mechanism will be further enhanced to ensure the latency requirements of low-latency services.

### SUMMARY

Embodiments of the present disclosure provide a communication method, an access point device, and a communication system, so as to further enhance the M-AP coordination mechanism.

In an aspect, embodiments of the present disclosure provide a communication method, which includes: determining, by a first access point device (AP), a first wireless frame, where the first wireless frame includes first identification information, and the first identification information identifies information for a multi-AP (M-AP) coordination transmission scheduling; and sending the first wireless frame.

In another aspect, embodiments of the present disclosure provide a communication method, which includes: receiving, by a second AP, a first wireless frame sent by a first AP, where the first wireless frame includes first identification information, and the first identification information identifies information for an M-AP coordination transmission scheduling.

In another aspect, embodiments of the present disclosure provide an access point device, which is a first access point device and includes: a determining module configured to determine a first wireless frame, where the first wireless frame includes first identification information, and the first identification information identifies information for an M-AP coordination transmission scheduling; and a sending module configured to send the first wireless frame.

In another aspect, embodiments of the present disclosure provide an access point device, which is a second access point device and includes: a first receiving module configured to receive a first wireless frame, where the first wireless frame includes first identification information, and the first identification information identifies information for an M-AP coordination transmission scheduling.

In another aspect, embodiments of the present disclosure provide an access point device, which is a first access point device and includes one or more processors, where the access point device is configured to perform the communication method according to the embodiments of the present disclosure.

In another aspect, embodiments of the present disclosure provide an access point device, which is a second access point device and includes one or more processors, where the access point device is configured to perform the communication method according to the embodiments of the present disclosure.

Embodiments of the present disclosure further provide a communication system, which includes a first access point device and a second access point device configured to implement the communication methods according to the embodiments of the present disclosure, respectively.

Embodiments of the present disclosure further provide a storage medium, which has stored therein instructions that, when run on a communication device, cause the communication device to perform the communication method according to the embodiments of the present disclosure.

In the embodiments of the present disclosure, a first access point device sends one or more M-AP coordination transmission schedulings via a first wireless frame, and a second access point device may join to the intended scheduling according to its own information after receiving information for the M-AP coordination transmission scheduling. After the M-AP coordination transmission scheduling is completed, the APs do not need to negotiate the M-AP coordination operation again when each transmission occasion is obtained within the corresponding duration. This reduces the interference in the communication between multiple APs, thereby reducing the inter-cell interference, ensuring the user service quality, improving the network communication rate and reducing the latency. By means of the cooperation between multiple APs, the configuration of communication resources is more reasonable, thus improving the access efficiency while ensuring the communication quality so as to achieve better network performance.

Additional aspects and advantages of the embodiments of the present disclosure will be given in part in the following descriptions, become apparent in part from the following descriptions, or be learned from the practice of the present disclosure.

### BRIEF DESCRIPTION OF THE DRAWINGS

In order to more clearly illustrate the technical solutions in the embodiments of the present disclosure, the drawings required for the description of the embodiments are introduced below. The following drawings only illustrate some embodiments of the present disclosure, but do not impose specific limitations on the protection scope of the present disclosure.
FIG. 1 is a schematic diagram of the architecture of a communication system provided according to an embodiment of the present disclosure.
FIG. 2 is a first schematic interactive diagram of a method provided according to an embodiment of the present disclosure.
FIG. 3 is a third schematic interactive diagram of a method provided according to an embodiment of the present disclosure.
FIG. 4 is a first schematic flowchart of a communication method provided according to an embodiment of the present disclosure.
FIG. 5 is a second schematic flowchart of a communication method provided according to an embodiment of the present disclosure.
FIG. 6 is a schematic block diagram of a first access point device provided according to an embodiment of the present disclosure.
FIG. 7 is a schematic block diagram of a second access point device provided according to an embodiment of the present disclosure.
FIG. 8 is a schematic block diagram of a terminal provided according to an embodiment of the present disclosure.
FIG. 9 is a schematic block diagram of a chip provided according to an embodiment of the present disclosure.

### DETAILED DESCRIPTION

Embodiments of the present disclosure provide a communication method, an access point device, and a communication system.

In a first aspect, embodiments of the present disclosure provide a communication method, which includes: determining, by a first AP, a first wireless frame, where the first wireless frame includes first identification information, and the first identification information identifies information for an M-AP coordination transmission scheduling; and sending the first wireless frame.

In the above embodiments, a first access point device sends one or more M-AP coordination transmission schedulings via a first wireless frame, and a second access point device may join to the intended scheduling according to its own information after receiving information for the M-AP coordination transmission scheduling. After the M-AP coordination transmission scheduling is completed, the APs do not need to negotiate the M-AP coordination operation again when each transmission occasion is obtained within the corresponding duration. This reduces the interference in the communication between multiple APs, thereby reducing the inter-cell interference, ensuring the user service quality, improving the network communication rate and reducing the latency. By means of the cooperation between multiple APs, the configuration of communication resources is more reasonable, thus improving the access efficiency while ensuring the communication quality so as to achieve better network performance.

In conjunction with some embodiments of the first aspect, in some embodiments, the first identification information includes a first field, and the first field includes at least one of: a first subfield identifying an identifier for the M-AP coordination transmission scheduling to uniquely identify the M-AP coordination transmission scheduling to distinguish it from other MAP coordination transmission schedulings sent by the first access point device, a second subfield identifying a transmission start time of the M-AP coordination transmission scheduling to identify an execution start time of the M-AP coordination transmission operation for the M-AP coordination transmission scheduling, or a third subfield identifying a transmission duration of the M-AP coordination transmission scheduling to identify an execution duration of the M-AP coordination transmission operation for the M-AP coordination transmission scheduling.

In conjunction with some embodiments of the first aspect, in some embodiments, the first identification information includes a second field, and the second field identifies one or more coordination transmission strategies supported by the M-AP coordination transmission scheduling.

In the above embodiments, the second field identifies one or more M-AP coordination transmission strategies supported by the M-AP coordination transmission scheduling.

In conjunction with some embodiments of the first aspect, in some embodiments, the first identification information includes a third field, and the third field identifies transmission strategy parameters of the one or more coordination transmission strategies.

In the above embodiments, the byte length of the third field may be a variable determined by the transmission strategy parameters the third field contains, for example, the third field may sequentially contain parameter fields of the coordination transmission strategy with the bit set to 1 in the second field. Specifically, when the second field indicates that the M-AP coordination transmission scheduling only supports coordinated orthogonal frequency division multiple access (Co-FDMA), the third field includes a Co-FDMA parameter field and a coordinated spatial reuse (Co-SR) parameter field, but does not include transmission strategy parameters for other coordination transmission strategies.

In conjunction with some embodiments of the first aspect, in some embodiments, the first wireless frame is an action frame, the first identification information is carried in an action field of the first wireless frame, and the action field further includes at least one of: a category subfield, a UHR action subfield, or a dialogue token subfield, where the category subfield identifies the first wireless frame as a UHR action frame to identify the category of the first wireless frame, the UHR action subfield is set to a first parameter value to identify the first wireless frame as an M-AP coordination scheduling notification frame, and the dialogue token subfield identifies a current session to distinguish it from other sessions.

In conjunction with some embodiments of the first aspect, in some embodiments, after sending the first wireless frame, the method includes: receiving a second wireless frame sent by a second AP, where the second wireless frame includes second identification information, and the second identification information identifies a target M-AP coordination transmission scheduling to which the second AP intends to join.

In the above embodiments, the first access point device receives the second wireless frame sent by the second access point device. During a period from the start time identified for the target M-AP coordination transmission scheduling contained in the second wireless frame to an end of a transmission duration, the first AP and the second AP perform corresponding M-AP coordination operations according to the information carried in the second wireless frame.

In conjunction with some embodiments of the first aspect, in some embodiments, the second identification information includes a fourth field, and the fourth field includes a media access control (MAC) address of the first AP and an identifier for the target M-AP coordination transmission scheduling.

In the above embodiments, the fourth field identifies the target M-AP coordination transmission scheduling to which the second access point device intends to join. Optionally, a receive address (RA) of the second wireless frame is set to an MAC address of the first access point device corresponding to the target M-AP coordination transmission scheduling to which the second access point device intends to join.

In conjunction with some embodiments of the first aspect, in some embodiments, the second identification information includes a fifth field, and the fifth field identifies the target M-AP coordination transmission strategy supported and accepted by the second AP.

In the above embodiments, the fifth field identifies the M-AP coordination transmission strategy supported and accepted by the second access point device. Optionally, the fifth field may have a length of a byte, and setting each bit to 1 indicates the support for a specific coordination transmission strategy. For example, when the lower 4 bits of the fifth field are set to 1, they respectively indicate that the target M-AP coordination scheduling supports Co-FDMA, Co-SR, Co-BF, and JT strategies; and the higher 4 bits of the fifth field are reserved, and when each bit is set to 1, it may indicate the support for other potential M-AP coordination transmission strategies. When the corresponding bit is set to 0, it indicates that the target M-AP coordination transmission scheduling does not support the coordination transmission strategy corresponding to each bit.

In conjunction with some embodiments of the first aspect, in some embodiments, the second wireless frame is an action frame, the second identification information is carried in an action field of the second wireless frame, and the action field further includes at least one of: a category subfield, a UHR action subfield, or a dialogue token subfield, where the category subfield identifies the second wireless frame as a UHR action frame to identify the category of the second wireless frame, the UHR action subfield is set to a second parameter value to identify that the second wireless frame is an M-AP coordination scheduling request frame or an M-AP coordination scheduling confirmation frame, and the dialogue token subfield identifies that a current session and the first wireless frame are the same session to facilitate the first access point device 101 to receive the second wireless frame.

In conjunction with some embodiments of the first aspect, in some embodiments, after receiving the second wireless frame sent by the second AP, the method further includes: during a period from a transmission start time of the target M-AP coordination transmission scheduling to an end of a transmission duration, performing an M-AP coordination transmission operation with the second AP according to the target M-AP coordination transmission strategy.

In the above embodiments, after the first access point device receives the second wireless frame sent by the second access point device, if the first access point device 101 obtains a transmission occasion, the first access point device 101 sends a first M-AP coordination trigger frame to one or more second access point devices 102 to trigger the M-AP coordination transmission operation.

In conjunction with some embodiments of the first aspect, in some embodiments, the M-AP coordination transmission operation with the second AP includes at least one of: obtaining, by the first AP, a transmission occasion, and sending, by the first AP, a first M-AP coordination trigger frame to one or more second APs; and after receiving a response frame to the first M-AP coordination trigger frame from the one or more second APs, performing, by the first AP, an M-AP coordination operation with the responding second AP according to the transmission strategy parameters of the target M-AP coordination transmission strategy; or receiving a second M-AP coordination trigger frame sent by the second AP, sending a response frame to the second M-AP coordination trigger frame to the second AP, and performing an M-AP coordination operation according to the transmission strategy parameters of the target M-AP coordination transmission strategy.

In the above embodiments, during a period from a transmission start time of the target M-AP coordination transmission scheduling to an end of a transmission duration, the first access point device performs an M-AP coordination transmission operation with the second access point device 102 according to the target M-AP coordination transmission strategy.

In a second aspect, embodiments of the present disclosure provide a communication method, which includes: receiving, by a second AP, a first wireless frame sent by a first AP, where the first wireless frame includes first identification information, and the first identification information identifies information for an M-AP coordination transmission scheduling.

In conjunction with some embodiments of the second aspect, in some embodiments, the first identification information includes a first field, and the first field includes at least one of: a first subfield identifying an identifier for the M-AP coordination transmission scheduling, a second subfield identifying a transmission start time of the M-AP coordination transmission scheduling, or a third subfield identifying a transmission duration of the M-AP coordination transmission scheduling.

In conjunction with some embodiments of the second aspect, in some embodiments, the first identification information includes a second field, and the second field identifies one or more coordination transmission strategies supported by the M-AP coordination transmission scheduling.

In conjunction with some embodiments of the second aspect, in some embodiments, the first identification information includes a third field, and the third field identifies transmission strategy parameters of the one or more coordination transmission strategies.

In conjunction with some embodiments of the second aspect, in some embodiments, the first wireless frame is an action frame, the first identification information is carried in an action field of the first wireless frame, and the action field further includes at least one of: a category subfield, a UHR action subfield, or a dialogue token subfield, where the category subfield identifies the first wireless frame as a UHR action frame, the UHR action subfield is set to a first parameter value to identify the first wireless frame as an M-AP coordination scheduling notification frame, and the dialogue token subfield identifies a current session.

In conjunction with some embodiments of the second aspect, in some embodiments, after receiving the first wireless frame sent by the first AP, the method includes: sending a second wireless frame to a second AP, where the second wireless frame includes second identification information, and the second identification information identifies a target M-AP coordination transmission scheduling to which the second AP intends to join.

In conjunction with some embodiments of the second aspect, in some embodiments, the second identification information includes a fourth field, and the fourth field includes an MAC address of the first AP and an identifier for the target M-AP coordination transmission scheduling.

In conjunction with some embodiments of the second aspect, in some embodiments, the second identification information includes a fifth field, and the fifth field identifies the target M-AP coordination transmission strategy supported and accepted by the second AP.

In conjunction with some embodiments of the second aspect, in some embodiments, the second wireless frame is an action frame, the second identification information is carried in an action field of the second wireless frame, and the action field further includes at least one of: a category subfield, a UHR action subfield, or a dialogue token subfield, where the category subfield identifies the second wireless frame as a UHR action frame, the UHR action subfield is set to a second parameter value to identify that the second wireless frame is an M-AP coordination scheduling request frame or an M-AP coordination scheduling confirmation frame, and the dialogue token subfield identifies that a current session and the first wireless frame are the same session.

In conjunction with some embodiments of the second aspect, in some embodiments, after sending the second wireless frame to the first AP, the method further includes: during a period from a transmission start time of the target M-AP coordination transmission scheduling to an end of a transmission duration, performing an M-AP coordination transmission operation with the first AP according to the target M-AP coordination transmission strategy.

In conjunction with some embodiments of the second aspect, in some embodiments, the M-AP coordination transmission operation with the first AP includes at least one of: receiving a first M-AP coordination trigger frame sent by the first AP, sending a response frame to the first M-AP coordination trigger frame to the first AP, and performing an M-AP coordination operation according to the transmission strategy parameters of the target M-AP coordination transmission strategy; or obtaining, by the second AP, a transmission occasion, and sending, by the second AP, a second M-AP coordination trigger frame to the first AP; and after receiving, from the first AP, a response frame to the second M-AP coordination trigger frame, performing, by the second AP, an M-AP coordination operation according to the transmission strategy parameters of the target MAP coordination transmission strategy.

In a third aspect, embodiments of the present disclosure provide an access point device, which is a first access point device and includes at least one of a determining module or a sending module, where the above-mentioned access point device is configured to perform an optional implementation of the first aspect.

In a fourth aspect, embodiments of the present disclosure provide an access point device, which is a second access point device and includes a first receiving module, where the above-mentioned access point device is configured to perform an optional implementation of the second aspect.

In a fifth aspect, embodiments of the present disclosure provide an access point device, which is a first access point device and includes one or more processors, where the access point device is configured to perform an optional implementation of the first aspect.

In a sixth aspect, embodiments of the present disclosure provide an access point device, which is a second access point device and includes one or more processors, where the access point device is configured to perform an optional implementation of the second aspect.

In a seventh aspect, embodiments of the present disclosure provide a communication system, which includes a first access point device configured to perform an optional implementation of the first aspect and a second access point device configured to perform an optional implementation of the second aspect.

In an eighth aspect, embodiments of the present disclosure provide a storage medium, which has stored therein instructions that, when run on a communication device, cause the communication device to perform an optional implementation of the first aspect or the second aspect.

In a ninth aspect, embodiments of the present disclosure provide a program product that, when executed by a communication device, causes the communication device to perform the methods described in an optional implementation of the first aspect and an optional implementation of the second aspect.

In a tenth aspect, embodiments of the present disclosure provide a computer program that, when run on a computer, causes the computer to perform the methods described in an optional implementation of the first aspect and an optional implementation of the second aspect.

In an eleventh aspect, embodiments of the present disclosure provide a chip or chip system. The chip or chip system includes a processing circuitry configured to perform the methods described in an optional implementation of the above first aspect and an optional implementation of the above second aspect.

It may be understood that the access point device, the communication system, the storage medium, the program product, the computer program, and the chip or chip system which are mentioned above are all configured to execute the methods provided in the embodiments of the present disclosure. Therefore, regarding the beneficial effects they may achieve, reference may be made to the beneficial effects of the corresponding methods, which will not be repeated here.

Embodiments of the present disclosure provide a communication method, an access point device, and a communication system. In some embodiments, terms such as "communication method," "signal transmitting method," and "wireless frame transmitting method" may be used interchangeably; and terms such as "information processing system" and "communication system" may be used interchangeably.

The embodiments of the present disclosure are not exhaustive, but are merely illustrative of some embodiments, and are not intended to limit the scope of protection of the present disclosure. Unless there is any contradiction, each step in a particular embodiment may be implemented as an independent embodiment, and the steps may be arbitrarily combined. For example, the solution after removing some steps in a particular embodiment may also be implemented as an independent embodiment, and the order of the steps in a particular embodiment may be arbitrarily interchanged. In addition, the optional implementations in a particular embodiment may be arbitrarily combined. Furthermore, the embodiments may be arbitrarily combined. For example, some or all steps in different embodiments may be arbitrarily combined, and a particular embodiment may be arbitrarily combined with optional implementations of other embodiments.

In each embodiment of the present disclosure, unless otherwise specified or contradicted by logic, the terms and/or descriptions between the embodiments are consistent and may be referenced by each other. The technical features in different embodiments may be combined based on their inherent logical relationships to form a new embodiment.

The terms used in the embodiments of the present disclosure are only for the purpose of describing specific embodiments and are not intended to limit the present disclosure.

In the embodiments of the present disclosure, "a plurality of" refers to two or more.

In some embodiments, terms such as "at least one of," "one or more," "a plurality of," "multiple," and the like may be used interchangeably.

In some embodiments, the descriptions such as "at least one of A or B," "A and/or B," "A in one case, B in another case" or "in response to one case A, in response to another case B" may include the following technical solutions depending on the situations: A is executed in some embodiments (A is executed independently from B); B is executed in some embodiments (B is executed independently from A); A or B is selected for execution in some embodiments (A and B are selectively executed); and A and B are executed in some embodiments (A and B are both executed). The same applies when there are more branches such as A, B, and C.

In some embodiments, the descriptions such as "A or B" may include the following technical solutions depending on the situations: A is executed in some embodiments (A is executed independently from B); B is executed in some embodiments (B is executed independently from A); and A or B is selected for execution in some embodiments (A and B are selectively executed). The same applies when there are more branches such as A, B, and C.

The prefixes such as "first" and "second" in the embodiments of the present disclosure are only used to distinguish different described objects and do not constitute any restrictions on the position, order, priority, quantity or content of the described objects. For the statement of the described objects, reference is made to the description in the context of the claims or embodiments, and no unnecessary restrictions should be constituted due to the use of prefixes. For example, if the described object is a "field", the ordinal numbers preceding the "fields" in a "first field" and a "second field" do not limit the position or order of the "fields". "First" and "second" do not limit whether the "fields" they modify are in the same message, nor do they limit the order of the "first field" and "second field". For another example, if the described object is "level", then the ordinal numbers preceding the "levels" in a "first level" and a "second level" do not restrict the priority between "levels". For another example, the number of the described objects is not limited by ordinal numbers and may be one or more. Taking a "first device" as an example, the number of "devices" may be one or more. In addition, the objects modified by different prefixes may be the same or different. For example, if the described object is a "device", then the "first device" and the "second device" may be the same device or different devices, and the types of the "first device" and the "second device" may be the same or different; for another example, if the described object is "information", then "first information" and "second information" may be the same information or different information, and the contents of the "first information" and the "second information" may be the same or different.

In some embodiments, "including A," "comprising A," "indicating A," and "carrying A" may be interpreted as directly carrying A or indirectly indicating A.

In some embodiments, terms such as "in response to...," "in response to determining...," "in the case of...," "at the time of...," "when...," "if...," "in a case where...," and the like may be used interchangeably.

In some embodiments, terms such as "greater than," "greater than or equal to," "not less than," "more than," "more than or equal to," "not smaller than," "higher than," "higher than or equal to," "not lower than," and "above" may be used interchangeably; and terms such as "less than," "less than or equal to," "not greater than," "smaller than," "smaller than or equal to," "not more than," "lower than," "lower than or equal to," "not higher than," and "below" may be used interchangeably.

In some embodiments, apparatuses and devices may be interpreted as being physical or virtual, and their names are not limited to the names described in the embodiments. In some cases, apparatuses and devices may also be understood as "equipments," "devices," "circuits," "network elements," "nodes," "functions," "units," "sections," "systems," "networks," "chips," "chip systems," "entities," and "bodies".

In some embodiments, the "network" may be interpreted as devices included in the network, e.g., an access network device, a core network device, or the like.

In some embodiments, obtaining data, information, and the like may comply with the laws and regulations of the country where the data, information, and the like are obtained.

In some embodiments, data, information, and the like may be obtained with the consent of the user.

In addition, each element, each row, or each column in the table in the embodiments of the present disclosure may be implemented as an independent embodiment, and the combination of any elements, any rows, and any columns may also be implemented as an independent embodiment.

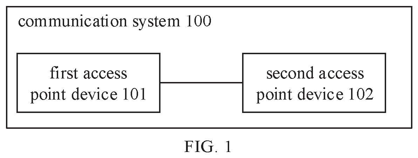

FIG. 1 is a schematic diagram illustrating the architecture of a communication system according to an embodiment of the present disclosure.

As shown in FIG. 1, the communication system 100 may include a first access point device (AP) 101 and a second access point device 102.

In some embodiments, the first access point device 101 and the second access point device 102 may be access points for mobile terminals to access a wired network. An access point (AP) acts as a bridge connecting the wired network and a wireless network. The main function of the access point is to connect various wireless network clients together and then connect the wireless network to the Ethernet. Specifically, the AP may be a terminal or a network device equipped with a wireless fidelity (Wi-Fi) chip. Optionally, the AP may support various WLAN standards, for example, but not limited to, 802.11ax, 802.11be, 802.11ac, 802.11n, 802.11g, 802.11b, 802.11bn, 802.11bf and 802.11a, as well as the next-generation 802.11 protocol.

In some embodiments, the communication system 100 further includes a plurality of stations (STAs), such as wireless communication chips, wireless sensors, or wireless communication terminals that support the Wi-Fi communication function. Optionally, the wireless communication terminal may be at least one of a mobile phone, a wearable device, an Internet of Things (IoT) device that supports the Wi-Fi communication function, a car with a Wi-Fi communication function, a smart car, a tablet computer (Pad), a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in smart grid, a wireless terminal in transportation safety, a wireless terminal in a smart city, or a wireless terminal in a smart home, but is not limited thereto.

Specifically, the STA may be a terminal or a network device equipped with a Wi-Fi chip. Optionally, the STA may support multiple WLAN standards, for example, but not limited to, 802.11ax, 802.11be, 802.11ac, 802.11n, 802.11g, 802.11b, 802.11bn, 802.11bf and 802.11a, as well as the next-generation 802.11 protocol.

Optionally, in the embodiments of the present disclosure, the AP and the STA may be devices that support multiple links (multi-links), respectively. For example, the AP and the STA may be represented as an access point multi-link device (AP MLD) and a non-access point multi-link device (Non-AP MLD), respectively. The AP MLD may represent an access point that supports a multi-link communication function, and the non-AP MLD may represent a station that supports a multi-link communication function.

It may be understood that the communication system described in this embodiment of the present disclosure is for the purpose of more clearly illustrating the technical solution in the embodiments of the present disclosure, but does not constitute a limitation on the technical solution provided in the embodiments of the present disclosure. Those of ordinary skill in the art may know that with the evolution of the system architecture and the emergence of new service scenarios, the technical solution provided in this embodiment of the present disclosure is also applicable to similar technical problems.

The following embodiments of the present disclosure may be applied to the communication system 100 shown in FIG. 1, or to some entities thereof, but are not limited thereto.

The entities shown in FIG. 1 are illustrative. The communication system 100 may include all or some of the entities in FIG. 1, or the communication system may include other entities outside in FIG. 1. The number and form of individual entities are arbitrary. The entities may be physical or virtual. The connection relationship between the entities is illustrative. The entities may not be connected to each other, or may be connected to each other in any way. The connection may be direct or indirect, and may be wired or wireless.

The embodiments of the present disclosure may be applied to wireless local area networks (WLANs), such as local area networks using the 802.11 series of protocols. In the WLANs, a basic service set (BSS) is a fundamental component of a WLAN. A BSS network consists of STAs with a certain association within a specific coverage area. One scenario of association is that STAs directly communicate with each other in a self-organizing network, which is called an independent basic service set (IBSS). Another more common scenario is that in a BSS network, there is only one central station dedicated to managing the BSS, called an access point device, and all other STAs in the network are associated with the central station. In the BSS network, other stations that are not the central station are called terminals, also known as non-AP STAs. The terminals and the non-AP STAs are collectively referred to as STAs. When describing STAs, it is not necessary to distinguish between the AP and non-AP STAs. In the same BSS network, due to factors such as the distance and the transmission power, an STA cannot detect another STA that is far away from it, and the two are hidden nodes of each other.

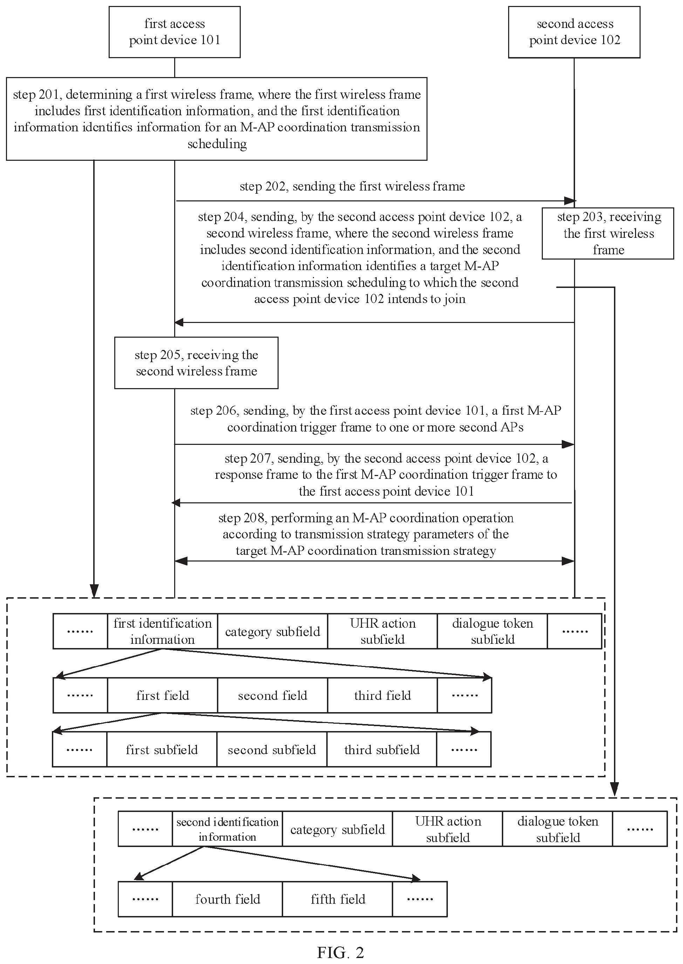

FIG. 2 is a first schematic interactive diagram illustrating a communication method according to an embodiment of the present disclosure. As shown in FIG. 2, the above method includes the following steps.

At step 201, the first access point device 101 determines a first wireless frame, where the first wireless frame includes first identification information, and the first identification information identifies information for an M-AP coordination transmission scheduling.

With the development trend of the increased frequency bands and improved frequencies supported by Wi-Fi devices, as well as the diversified needs of communication services, deployments of WLAN devices are becoming increasingly dense. The increasing density of access points (APs) leads to more inter-cell interference, and also increases the risk of access conflicts. To further improve the user service quality and overall network performance, the M-AP coordination mechanism needs to be further enhanced while pursuing improvements in the communication rate, the communication latency, and the reliability within a single BSS.

In the embodiments of the present disclosure, the first access point device 101 determines a first wireless frame and carries first identification information in the first wireless frame, and the first identification information identifies information for an M-AP coordination transmission scheduling. Optionally, the first access point device 101 may be an AP with coordination capabilities. The first access point device 101 coordinates its neighboring APs (neighboring APs that support an M-AP coordination, exemplified by the second access point device 102 in the embodiments of the present disclosure) by an M-AP coordination operation (M-APCO) to achieve collaborative transmission modes such as time-frequency resource sharing, spatial multiplexing, or joint transmissions.

The information for the M-AP coordination transmission scheduling such as an identifier for the M-AP coordination transmission scheduling and a transmission start time is used by one or more second access point devices 102 to determine whether to join the M-AP coordination transmission scheduling based on the information; or in the case where multiple MAP coordination transmission schedulings are included, the second access point device 102 selects a target M-AP coordination transmission scheduling based on its own information and joins to the target M-AP coordination transmission scheduling. In this way, by sending the first wireless frame, the negotiation establishment of the M-AP coordination transmission among multiple APs may be realized, so as to establish efficient coordination transmissions. This avoids the need for a single AP to negotiate the M-AP coordination transmission every time it obtains a transmission occasion, which would occupy a large number of transmission occasions, thereby increasing the transmission latency and reducing the network throughput. Therefore, an M-AP coordination transmission negotiation method is proposed.

The first wireless frame may be a newly defined wireless frame or an already defined action frame.

At step 202, the first access point device 101 sends the first wireless frame to the second access point device 102.

In this process, the first access point device 101 sends the first wireless frame to the second access point device 102, and cooperates with the second access point device 102 in a collaborative transmission mode, thereby realizing collaborative transmission modes such as time-frequency resource sharing, spatial multiplexing, or joint transmissions.

In the embodiments of the present disclosure, the first access point device 101 sends one or more M-AP coordination transmission schedulings to the second access point device 102 which supports the M-AP coordination operation capability via the first wireless frame, and the second access point device 102 may join to the intended scheduling according to its own information after receiving the information for the M-AP coordination transmission scheduling. After the M-AP coordination transmission scheduling is completed, the APs do not need to negotiate the M-AP coordination operation again when each transmission occasion is obtained within the corresponding duration. This reduces the interference in the communication between multiple APs, thereby reducing the inter-cell interference, ensuring the user service quality, improving the network communication rate and reducing the latency. By means of the cooperation between multiple APs, the configuration of communication resources is more reasonable, thus improving the access efficiency while ensuring the communication quality so as to achieve better network performance.

At step 203, the second access point device 102 receives the first wireless frame.

The second access point device 102 receives the first wireless frame and determines whether to join to the M-AP coordination transmission scheduling based on the information for the M-AP coordination transmission scheduling; or in the case where multiple M-AP coordination transmission schedulings are included, the second access point device 102 selects a target M-AP coordination transmission scheduling based on its own information and joins to the target M-AP coordination transmission scheduling.

In some embodiments, as shown in FIG. 2, the first identification information includes a first field, and the first field includes at least one of: a first subfield identifying an identifier for the M-AP coordination transmission scheduling to uniquely identify the M-AP coordination transmission scheduling to distinguish it from other M-AP coordination transmission schedulings sent by the first access point device 101, a second subfield identifying a transmission start time of the M-AP coordination transmission scheduling to identify an execution start time of the M-AP coordination transmission operation for the M-AP coordination transmission scheduling, or a third subfield identifying a transmission duration of the M-AP coordination transmission scheduling to identify an execution duration of the M-AP coordination transmission operation for the M-AP coordination transmission scheduling.

In some embodiments, as shown in FIG. 2, the first identification information includes a second field, and the second field identifies one or more coordination transmission strategies supported by the M-AP coordination transmission scheduling.

The second field identifies one or more M-AP coordination transmission strategies supported by the M-AP coordination transmission scheduling.

Optionally, the second field may have a length of a byte, and setting each bit to 1 indicates the support for a specific coordination transmission strategy. For example, when the lower 4 bits of the second field are set to 1, they respectively indicate that the M-AP coordination scheduling supports coordinated orthogonal frequency division multiple access (Co-FDMA), coordinated spatial reuse (Co-SR), coordinated beamforming (Co-BF), and joint-transmission (JT) strategies; and the higher 4 bits of the second field are reserved, and when each bit is set to 1, it may indicate the support for other potential M-AP coordination transmission strategies. When the corresponding bit is set to 0, it indicates that the M-AP coordination transmission scheduling does not support the coordination transmission strategy corresponding to each bit.

In some embodiments, as shown in FIG. 2, the first identification information includes a third field, and the third field identifies transmission strategy parameters of the one or more coordination transmission strategies.

The byte length of the third field may be a variable determined by the transmission strategy parameters the third field contains, for example, the third field may sequentially contain parameter fields of the coordination transmission strategy with the bit set to 1 in the second field. Specifically, when the second field indicates that the M-AP coordination transmission scheduling only supports the Co-FDMA, the third field includes a Co-FDMA parameter field and a Co-SR parameter field, but does not include transmission strategy parameters for other coordination transmission strategies.

In some embodiments, the first wireless frame is an action frame, the first identification information is carried in an action field of the first wireless frame, and the action field further includes at least one of: a category subfield, an ultra high reliability (UHR) action subfield, or a dialogue token subfield, where the category subfield identifies the first wireless frame as a UHR action frame to identify the category of the first wireless frame, the UHR action subfield is set to a first parameter value to identify the first wireless frame as an M-AP coordination scheduling notification frame, and the dialogue token subfield identifies a current session to distinguish it from other sessions.

At step 204, the second access point device 102 sends a second wireless frame, where the second wireless frame includes second identification information, and the second identification information identifies a target M-AP coordination transmission scheduling to which the second AP intends to join.

In this process, after receiving the first wireless frame sent by one or more first access point devices 101, the second access point device 102 decides whether to participate in the specific M-AP coordination transmission scheduling based on its own capabilities. For example, if the second access point device 102 participates in the specific M-AP coordination transmission scheduling, the second AP sends a second wireless frame to the corresponding first AP, the second wireless frame carries second identification information, and the second identification information identifies the target M-AP coordination transmission scheduling to which the second AP intends to join.

At step 205, the first access point device 101 receives the second wireless frame sent by the second access point device 102.

The first access point device 101 receives the second wireless frame sent by the second access point device 102. During a period from the start time identified for the target M-AP coordination transmission scheduling contained in the second wireless frame to an end of a transmission duration, the first AP and the second AP perform corresponding M-AP coordination operations according to the information carried in the second wireless frame.

In some embodiments, as shown in FIG. 2, the second identification information includes a fourth field, and the fourth field includes a media access control (MAC) address of the first AP and an identifier for the target M-AP coordination transmission scheduling. The fourth field identifies the target M-AP coordination transmission scheduling to which the second access point device 102 intends to join. Optionally, a receive address (RA) of the second wireless frame is set to an MAC address of the first access point device 101 corresponding to the target M-AP coordination transmission scheduling to which the second access point device 102 intends to join.

In some embodiments, as shown in FIG. 2, the second identification information includes a fifth field, and the fifth field identifies the target M-AP coordination transmission strategy supported and accepted by the second AP.

The fifth field identifies the M-AP coordination transmission strategy supported and accepted by the second access point device 102. Optionally, the fifth field may have a length of a byte, and setting each bit to 1 indicates the support for a specific coordination transmission strategy. For example, when the lower 4 bits of the fifth field are set to 1, they respectively indicate that the target M-AP coordination scheduling supports Co-FDMA, Co-SR, Co-BF, and JT strategies; and the higher 4 bits of the fifth field are reserved, and when each bit is set to 1, it may indicate the support for other potential M-AP coordination transmission strategies. When the corresponding bit is set to 0, it indicates that the target M-AP coordination transmission scheduling does not support the coordination transmission strategy corresponding to each bit.

Optionally, the fifth field indicating the supported transmission strategies should include those identified and supported by the second field.

In some embodiments, as shown in FIG. 2, the second wireless frame is an action frame, the second identification information is carried in an action field of the second wireless frame, and the action field further includes at least one of: a category subfield, a UHR action subfield, or a dialogue token subfield, where the category subfield identifies the second wireless frame as a UHR action frame to identify the category of the second wireless frame, the UHR action subfield is set to a second parameter value to identify that the second wireless frame is an M-AP coordination scheduling request frame or an M-AP coordination scheduling confirmation frame, and the dialogue token subfield identifies that a current session and the first wireless frame are the same session to facilitate the first access point device 101 to receive the second wireless frame.

At step 206, the first access point device 101 sends a first M-AP coordination trigger frame to one or more second APs.

After the first access point device 101 receives the second wireless frame sent by the second access point device 102, if the first access point device 101 obtains a transmission occasion, the first access point device 101 sends a first M-AP coordination trigger frame to one or more second access point devices 102 to trigger the M-AP coordination transmission operation.

At step 207, the second access point device 102 sends a response frame to the first M-AP coordination trigger frame to the first access point device 101.

If the second access point device 102 participates in the M-AP coordination transmission operation, it sends a response frame to the first M-AP coordination trigger frame to the first access point device 101.

At step 208, an M-AP coordination operation is performed according to transmission strategy parameters of the target M-AP coordination transmission strategy.

During a period from a transmission start time of the target M-AP coordination transmission scheduling to an end of a transmission duration, the first access point device 101 performs an M-AP coordination transmission operation with the second access point device 102 according to the target M-AP coordination transmission strategy.

The communication method involved in the embodiments of the present disclosure may include at least one of the above-mentioned steps or the above-mentioned embodiments. For example, step 201 may be implemented as an independent embodiment, step 202 may be implemented as an independent embodiment, step 203 may be implemented as an independent embodiment, step 204 may be implemented as an independent embodiment, step 205 may be implemented as an independent embodiment, step 206 may be implemented as an independent embodiment, step 207 may be implemented as an independent embodiment, and step 208 may be implemented as an independent embodiment, the combination of step 201 and step 202 may be implemented as an independent embodiment, the combination of step 204 and step 205 may be implemented as an independent embodiment, the combination of step 206 and step 207 may be implemented as an independent embodiment, and the combination of step 206, step 207 and step 208 may be implemented as an independent embodiment, but the communication method is not limited thereto.

In some embodiments, reference may be made to other optional implementations described before or after the specification corresponding to FIG. 2.

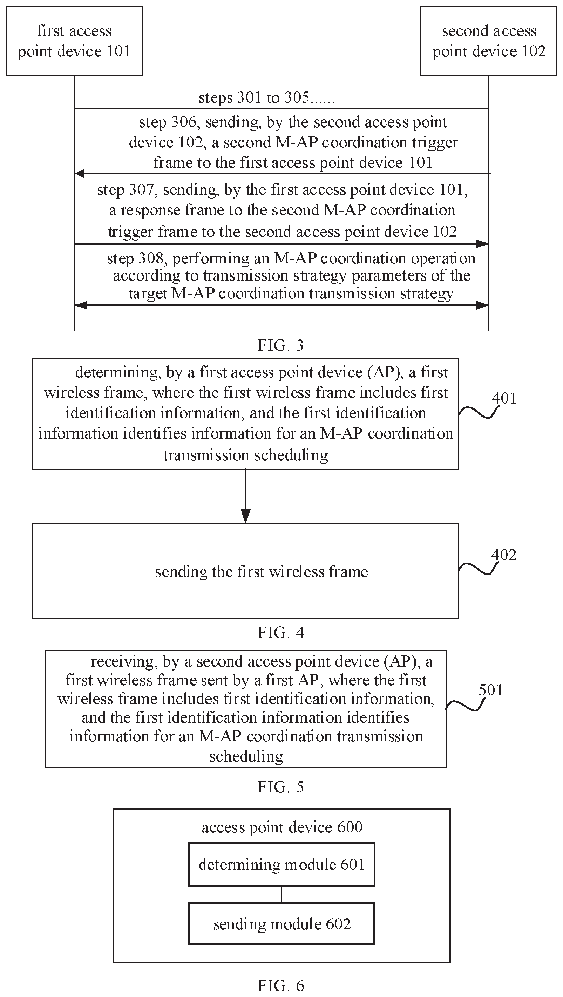

FIG. 3 is a second interactive schematic diagram illustrating a communication method according to an embodiment of the present disclosure. As shown in FIG. 3, steps 301 to 305 correspond to steps 201 to 205 in FIG. 2 in a one-to-one manner, and will not be repeated here.

At step 306, the second access point device 102 sends a second M-AP coordination trigger frame to the first access point device 101.

When the second access point device 102 obtains a transmission occasion, it sends an M-AP coordination trigger frame (second M-AP coordination trigger frame) to the first access point device 101 to trigger the M-AP coordination transmission operation.

At step 307, the first access point device 101 sends a response frame to the second M-AP coordination trigger frame to the second access point device 102.

If the first access point device 101 participates in the M-AP coordination transmission operation, it sends a response frame to the second M-AP coordination trigger frame to the second access point device 102.

At step 308, an M-AP coordination operation is performed according to transmission strategy parameters of the target M-AP coordination transmission strategy.

During a period from a transmission start time of the target M-AP coordination transmission scheduling to an end of a transmission duration, the first access point device 101 performs an M-AP coordination transmission operation with the second access point device 102 according to the target M-AP coordination transmission strategy.

The communication method involved in the embodiments of the present disclosure may include at least one of the above-mentioned steps or the above-mentioned embodiments. For example, step 301 may be implemented as an independent embodiment, step 302 may be implemented as an independent embodiment, step 303 may be implemented as an independent embodiment, step 304 may be implemented as an independent embodiment, step 305 may be implemented as an independent embodiment, step 306 may be implemented as an independent embodiment, step 307 may be implemented as an independent embodiment, step 308 may be implemented as an independent embodiment, the combination of step 301 and step 302 may be implemented as an independent embodiment, the combination of step 304 and step 305 may be implemented as an independent embodiment, the combination of step 306 and step 307 may be implemented as an independent embodiment, and the combination of step 306, step 307 and step 308 may be implemented as an independent embodiment, but the communication method is not limited thereto.

In some embodiments, reference may be made to other optional implementations described before or after the specification corresponding to FIG. 3.

In some embodiments, the names of information and the like are not limited to the names described in the embodiments. Terms such as "information," "message," "signal," "signaling," "report," "configuration," "indication," "instruction," "command," "channel," "parameter," "domain," "field," "symbol," "bit," "data," "program," and "chip" may be used interchangeably.

In some embodiments, terms such as "moment," "point in time," "time," and "time location" may be used interchangeably, and terms such as "duration," "time period," "time window," "window," and "time" may be used interchangeably.

In some embodiments, terms such as "wireless access scheme" and "waveform" may be used interchangeably.

In some embodiments, terms such as "certain," "preset," "predetermined," "set," "indicated," "particular," "any," and "first" may be used interchangeably. "A certain A," "a preset A," "a predetermined A," "a set A," "an indicated A," "a particular A," "any A," and "a first A" may be interpreted as A predefined in a protocol or the like, or as A obtained by setting, configuration, indication or the like, or as a specific A, a certain A, any A, a first A or the like, but are not limited thereto.

In some embodiments, determining or judging may be performed by a value represented by 1 bit (0 or 1), or by a true or false value (boolean), or by a comparison of numerical values (e.g., a comparison with a predetermined value), but is not limited thereto.

In some embodiments, "not expecting to receive" may be interpreted as not receiving on time domain resources and/or frequency domain resources, or as not performing subsequent processing on data after receiving it; and "not expecting to send" may be interpreted as not sending, or as sending but not expecting a receiver to respond to the sent content.

FIG. 4 is a first schematic flowchart illustrating a communication method according to an embodiment of the present disclosure.

As shown in FIG. 4, the above method may be performed by the first access point device 101, and the method includes the following steps.

At step 401, a first access point device (AP) determines a first wireless frame, where the first wireless frame includes first identification information, and the first identification information identifies information for an M-AP coordination transmission scheduling.

At step 402, the first wireless frame is sent.

Optionally, in an embodiment of the present disclosure, the first identification information includes a first field, and the first field includes at least one of: a first subfield identifying an identifier for the M-AP coordination transmission scheduling, a second subfield identifying a transmission start time of the M-AP coordination transmission scheduling, or a third subfield identifying a transmission duration of the M-AP coordination transmission scheduling.

Optionally, in an embodiment of the present disclosure, the first identification information includes a second field, and the second field identifies one or more coordination transmission strategies supported by the M-AP coordination transmission scheduling.

Optionally, in an embodiment of the present disclosure, the first identification information includes a third field, and the third field identifies transmission strategy parameters of the one or more coordination transmission strategies.

Optionally, in an embodiment of the present disclosure, the first wireless frame is an action frame, the first identification information is carried in an action field of the first wireless frame, and the action field further includes at least one of: a category subfield, a UHR action subfield, or a dialogue token subfield, where the category subfield identifies the first wireless frame as a UHR action frame, the UHR action subfield is set to a first parameter value to identify the first wireless frame as an M-AP coordination scheduling notification frame, and the dialogue token subfield identifies a current session.

Optionally, in an embodiment of the present disclosure, after sending the first wireless frame, the method includes the following steps.

At step 405, a second wireless frame sent by a second AP is received, where the second wireless frame includes second identification information, and the second identification information identifies a target M-AP coordination transmission scheduling to which the second AP intends to join.

Optionally, in an embodiment of the present disclosure, the second identification information includes a fourth field, and the fourth field includes an MAC address of the first AP and an identifier for the target M-AP coordination transmission scheduling.

Optionally, in an embodiment of the present disclosure, the second identification information includes a fifth field, and the fifth field identifies the target M-AP coordination transmission strategy supported and accepted by the second AP.

Optionally, in an embodiment of the present disclosure, the second wireless frame is an action frame, the second identification information is carried in an action field of the second wireless frame, and the action field further includes at least one of: a category subfield, a UHR action subfield, or a dialogue token subfield, where the category subfield identifies the second wireless frame as a UHR action frame, the UHR action subfield is set to a second parameter value to identify that the second wireless frame is an M-AP coordination scheduling request frame or an M-AP coordination scheduling confirmation frame, and the dialogue token subfield identifies that a current session and the first wireless frame are the same session.

Optionally, in an embodiment of the present disclosure, after receiving the second wireless frame sent by the second AP, the method further includes the following steps.

At step 408, during a period from a transmission start time of the target M-AP coordination transmission scheduling to an end of a transmission duration, an M-AP coordination transmission operation is performed with the second AP according to the target M-AP coordination transmission strategy.

Optionally, in an embodiment of the present disclosure, the M-AP coordination transmission operation with the second AP includes at least one of the following steps.

At step 406, the first AP obtains a transmission occasion, and sends a first M-AP coordination trigger frame to one or more second APs; and after receiving a response frame to the first M-AP coordination trigger frame from the one or more second APs, the first AP performs an M-AP coordination operation with the responding second AP according to the transmission strategy parameters of the target M-AP coordination transmission strategy.

At step 407, a second M-AP coordination trigger frame sent by the second AP is received, a response frame to the second M-AP coordination trigger frame is sent to the second AP, and an M-AP coordination operation is performed according to the transmission strategy parameters of the target M-AP coordination transmission strategy.

The communication method involved in the embodiments of the present disclosure may include at least one of the above-mentioned steps or the above-mentioned embodiments. For example, step 401 may be implemented as an independent embodiment, step 402 may be implemented as an independent embodiment, step 405 may be implemented as an independent embodiment, step 406 may be implemented as an independent embodiment, step 407 may be implemented as an independent embodiment, step 408 may be implemented as an independent embodiment, the combination of step 401 and step 402 may be implemented as an independent embodiment, and the combination of step 406 and step 474 may be implemented as an independent embodiment.

In some embodiments, reference may be made to other optional implementations described before or after the specification corresponding to FIG. 4.

FIG. 5 is a second schematic flowchart illustrating a communication method according to an embodiment of the present disclosure.

As shown in FIG. 5, the above method may be performed by the second access point device 102, and the method includes the following steps.

At step 501, a second access point device (AP) receives a first wireless frame sent by a first AP, where the first wireless frame includes first identification information, and the first identification information identifies information for an M-AP coordination transmission scheduling.

Optionally, in an embodiment of the present disclosure, the first identification information includes a first field, and the first field includes at least one of: a first subfield identifying an identifier for the M-AP coordination transmission scheduling, a second subfield identifying a transmission start time of the M-AP coordination transmission scheduling, or a third subfield identifying a transmission duration of the M-AP coordination transmission scheduling.

Optionally, in an embodiment of the present disclosure, the first identification information includes a second field, and the second field identifies one or more coordination transmission strategies supported by the M-AP coordination transmission scheduling.

Optionally, in an embodiment of the present disclosure, the first identification information includes a third field, and the third field identifies transmission strategy parameters of the one or more coordination transmission strategies.

Optionally, in an embodiment of the present disclosure, the first wireless frame is an action frame, the first identification information is carried in an action field of the first wireless frame, and the action field further includes at least one of: a category subfield, a UHR action subfield, or a dialogue token subfield, where the category subfield identifies the first wireless frame as a UHR action frame, the UHR action subfield is set to a first parameter value to identify the first wireless frame as an M-AP coordination scheduling notification frame, and the dialogue token subfield identifies a current session.

Optionally, in an embodiment of the present disclosure, after receiving the first wireless frame sent by the first AP, the method includes the following steps.

At step 504, a second wireless frame is sent to a second AP, where the second wireless frame includes second identification information, and the second identification information identifies a target M-AP coordination transmission scheduling to which the second AP intends to join.

Optionally, in an embodiment of the present disclosure, the second identification information includes a fourth field, and the fourth field includes an MAC address of the first AP and an identifier for the target M-AP coordination transmission scheduling.

Optionally, in an embodiment of the present disclosure, the second identification information includes a fifth field, and the fifth field identifies the target M-AP coordination transmission strategy supported and accepted by the second AP.

Optionally, in an embodiment of the present disclosure, the second wireless frame is an action frame, the second identification information is carried in an action field of the second wireless frame, and the action field further includes at least one of: a category subfield, a UHR action subfield, or a dialogue token subfield, where the category subfield identifies the second wireless frame as a UHR action frame, the UHR action subfield is set to a second parameter value to identify that the second wireless frame is an M-AP coordination scheduling request frame or an M-AP coordination scheduling confirmation frame, and the dialogue token subfield identifies that a current session and the first wireless frame are the same session.

Optionally, in an embodiment of the present disclosure, after sending the second wireless frame to the first AP, the method further includes the following steps.

At step 508, during a period from a transmission start time of the target M-AP coordination transmission scheduling to an end of a transmission duration, an M-AP coordination transmission operation is performed with the first AP according to the target M-AP coordination transmission strategy.

Optionally, in an embodiment of the present disclosure, the M-AP coordination transmission operation with the first AP includes at least one of the following steps.

At step 506, a first M-AP coordination trigger frame sent by the first AP is received, a response frame to the first M-AP coordination trigger frame is sent to the first AP, and an M-AP coordination operation is performed according to the transmission strategy parameters of the target M-AP coordination transmission strategy.

At step 507, the second AP obtains a transmission occasion, and sends a second MAP coordination trigger frame to the first AP; and after receiving, from the first AP, a response frame to the second M-AP coordination trigger frame, the second AP performs an M-AP coordination operation according to the transmission strategy parameters of the target M-AP coordination transmission strategy.

The communication method involved in the embodiments of the present disclosure may include at least one of the above-mentioned steps or the above-mentioned embodiments. For example, step 501 may be implemented as an independent embodiment, step 504 may be implemented as an independent embodiment, step 508 may be implemented as an independent embodiment, step 506 may be implemented as an independent embodiment, step 507 may be implemented as an independent embodiment, and the combination of step 506 and step 507 may be implemented as an independent embodiment, but the communication method is not limited thereto.

In some embodiments, reference may be made to other optional implementations described before or after the specification corresponding to FIG. 5.

The embodiments of the present disclosure further provide a device for implementing any one of the above methods. For example, a device is provided, which includes units or modules for implementing steps performed by the terminal in any one of the above methods. For another example, another device is provided, which includes units or modules for implementing steps performed by a network device (such as an access network device, a core network functional node, a core network device, or the like) in any one of the above methods.

It should be understood that the division of the units or modules in the above device is only a logical functional division. In actual implementation, the units or modules may be fully or partially integrated into a physical entity, or may be physically separated. Furthermore, the units or modules in the device may be implemented in the form of calling software by a processor, for example, the device includes a processor, the processor is connected to a memory, the memory has stored therein instructions, and the processor calls the instructions stored in the memory to implement any one of the above methods or to implement the functions of the units or modules of the above device. The processor is, for example, a general-purpose processor, such as a central processing unit (CPU) or a microprocessor, and the memory is either internal to the device or external to the device. Alternatively, the units or modules in the device may be implemented in the form of hardware circuits. The functions of some or all of the units or modules may be achieved by designing the hardware circuits. The above-mentioned hardware circuits may be understood as one or more processors. For example, in an implementation, the above-mentioned hardware circuit is an application-specific integrated circuit (ASIC). The functions of some or all of the above-mentioned units or modules are achieved by designing the logical relationships between the components within the circuit. As another example, in another implementation, the above-mentioned hardware circuit may be implemented by a programmable logic device (PLD). Taking a field programmable gate array (FPGA) as an example, it may include a large number of logic gates. The connection relationships between the logic gates are configured via configuration files, thereby achieving the functions of some or all of the above-mentioned units or modules. All units or modules of the above device may be implemented entirely in the form of calling software by the processor, or entirely by hardware circuits, or partially in the form of calling software by the processor and the rest by hardware circuits.

In the embodiments of the present disclosure, the processor is a circuit with signal processing functions. In an implementation, the processor may be a circuit with instruction reading and running functions, such as a CPU, a microprocessor, a graphics processing unit (GPU) (which may be understood as a microprocessor), or a digital signal processor (DSP). In another implementation, the processor may implement certain functions by means of the logical relationship of hardware circuits. The logical relationship of the above-mentioned hardware circuits is fixed or reconfigurable. For example, the processor is a hardware circuit implemented by an ASIC or a PLD, such as an FPGA. In a reconfigurable hardware circuit, the process of loading, by the processor, a configuration document to implement the hardware circuit configuration may be understood as the process of loading, by the processor, instructions to implement the functions of some or all of the above units or modules. In addition, the processor is may also be a hardware circuit designed for artificial intelligence, which may be understood as ASIC, such as a neural network processing unit (NPU), a tensor processing unit (TPU), a deep learning processing unit (DPU), or the like.

FIG. 6 is a schematic block diagram of an access point device provided according to an embodiment of the present disclosure. As shown in FIG. 6, the access point device is a first access point device, and the access point device 600 may include at least one of a determining module 601, a sending module 602, or the like.

In some embodiments, the determining module 601 described above is configured to determine a first wireless frame, where the first wireless frame includes first identification information, and the first identification information identifies information for an M-AP coordination transmission scheduling; and the sending module 602 is configured to send the first wireless frame.

Optionally, the determination module 601 described above is configured to execute at least one of the communication steps (such as step 201, step 301, or step 401, but not limited thereto) performed by the first access point device 101 in any of the above methods, which will not be elaborated here. The sending module 602 is configured to execute steps 202, 302, and 402.

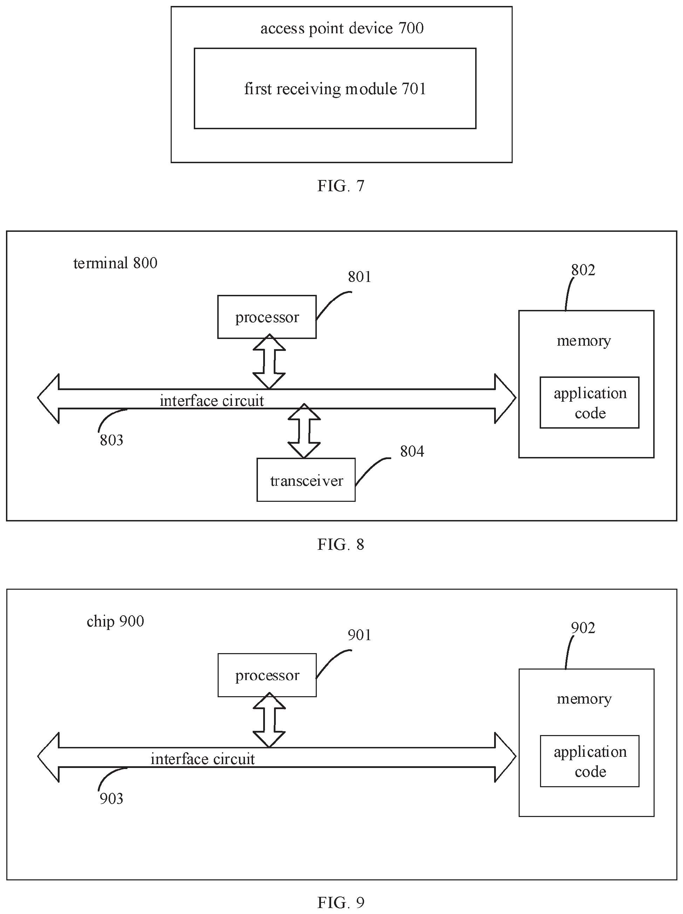

FIG. 7 is a schematic block diagram of an access point device provided according to an embodiment of the present disclosure. As shown in FIG. 7, the access point device is a second access point device, and the access point device 700 may include a first receiving module 701.

In some embodiments, the first receiving module 701 described above is configured to receive a first wireless frame, where the first wireless frame includes first identification information, and the first identification information identifies information for an M-AP coordination transmission scheduling.

Optionally, the first receiving module 701 described above is configured to perform at least one of the communication steps (such as step 203, step 303, or step 501, but not limited thereto) performed by the second access point device 102 in any of the above methods, which will not be elaborated here.

FIG. 8 is a schematic block diagram of a terminal 800 provided in an embodiment of the present disclosure. The terminal 800 may be a network device (such as an access network device, a core network device, or the like), a terminal (such as a user equipment, or the like), a chip, chip system, or processor that supports a network device to implement any one of the above methods, or a chip, chip system, or processor that supports a terminal to implement any one of the above methods. The terminal 800 may be configured to implement the methods as described in the above-mentioned method embodiments. For details, reference may be made to the description in the above-mentioned method embodiments.

As shown in FIG. 8, the terminal 800 includes one or more processors 801. The processor 801 may be a general-purpose processor, a special-purpose processor, or the like. The processor 801 may be, for example, a baseband processor or a central processor. The baseband processor may be configured to process a communication protocol and communication data, and the central processor may be configured to control a communication device (such as a base station, a baseband chip, a terminal, a terminal chip, a distributed unit (DU), a centralized unit (CU), or the like), execute a program, and process data of the program. The terminal 800 is configured to execute any one of the above methods.

In some embodiments, the terminal 800 further includes one or more memories 802 for storing instructions. Alternatively, all or some of the memories 802 may be located outside the terminal 800.

In some embodiments, the terminal 800 further includes one or more transceivers 804. When the terminal 800 includes one or more transceivers 804, at least one of the communication steps such as sending and/or receiving steps (for example, but not limited to, steps 202, 203, 204, 205, 206, 207, 302, 303, 304, 305, 306, 307, 401, 402, 405, 406, 407, 501, 504, 506, and 507) in the above methods is performed by the transceiver 804, and at least one of the other steps (for example, but not limited to, steps 201, 208, 301, 308, 408, and 508) is performed by the processor 801.

In some embodiments, the transceiver may include a receiver and/or a transmitter, and the receiver and the transmitter may be separate or integrated. Optionally, terms such as transceiver, transceiver unit, transceiver device, and transceiver circuit may be used interchangeably; terms such as transmitter, transmitter unit, transmitter device, and transmitter circuit may be used interchangeably; and terms such as receiver, receiver unit, receiver device, and receiver circuit may be used interchangeably.

In some embodiments, the terminal 800 may include one or more interface circuits 803. Optionally, the interface circuits 803 are connected to the memory 802. The interface circuits 803 may be configured to receive signals from the memory 802 or other devices, and may be configured to send signals to the memory 802 or other devices. For example, the interface circuits 803 may read instructions stored in the memory 802 and send the instructions to the processor 801.

The terminal 800 described in the above embodiments may be a communication device such as a user equipment, but the scope of the terminal 800 described in the present disclosure is not limited thereto, and the structure of the terminal 800 may not be limited to FIG. 8. The terminal 800 may be an independent device or part of a larger device. For example, the terminal 800 may be (1) a stand-alone integrated circuit (IC), or a chip, or a chip system or subsystem; (2) a set of one or more ICs, in which optionally, the set of ICs may further include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, or the like; or (6) others.

FIG. 9 is a schematic block diagram of a chip 900 provided in an embodiment of the present disclosure. For the case where the terminal 800 may be a chip or a chip system, reference may be made to the block diagram of the chip 900 shown in FIG. 9, but the present disclosure is not limited thereto.

The chip 900 includes one or more processors 901, and the chip 900 is configured to perform any one of the above methods.

In some embodiments, the chip 900 further includes one or more interface circuits 903. Optionally, the interface circuits 903 are connected to the memory 902. The interface circuits 903 may be configured to receive signals from the memory 902 or other devices, and may be configured to send signals to the memory 902 or other devices. For example, the interface circuits 903 may read instructions stored in the memory 902 and send the instructions to the processor 901.

In some embodiments, at least one of the communication steps such as sending and/or receiving steps (for example, but not limited to, steps 202, 203, 204, 205, 206, 207, 302, 303, 304, 305, 306, 307, 401, 402, 405, 406, 407, 501, 504, 506, and 507) in the above methods is performed by the interface circuits 903, and at least one of the other steps (for example, but not limited to, steps 201, 208, 301, 308, 408, and 508) is performed by the processor 901.

In some embodiments, terms such as interface circuit, interface, transceiver pin, and transceiver may be used interchangeably.

In some embodiments, the chip 900 further includes one or more memories 902 for storing instructions. Alternatively, all or some of the memories 902 may be located outside the chip 900.

The present disclosure further provides a storage medium, which has stored therein instructions that, when executed on the terminal 800, cause the terminal 800 to perform any one of the above methods. Optionally, the above-mentioned storage medium is an electronic storage medium. Optionally, the above-mentioned storage medium is a computer-readable storage medium, but is not limited thereto; and the above-mentioned storage medium may also be a storage medium readable by other devices. Optionally, the above storage medium may be a non-transitory storage medium, but is not limited thereto; and the above-mentioned storage medium may also be a transitory storage medium.

The present disclosure further provides a program product that, when executed by the terminal 800, causes the terminal 800 to perform any one of the above methods. Optionally, the above-mentioned program product is a computer program product.

The present disclosure further provides a computer program that, when executed on a computer, causes the computer to perform functions of any one of the above-mentioned method embodiments.

## Claims

1. A communication method, comprising:
determining, by a first access point device (AP), a first wireless frame, wherein the first wireless frame comprises first identification information, and the first identification information identifies information for a multi-AP (M-AP) coordination transmission scheduling; and
sending the first wireless frame.

2. The communication method according to claim 1, wherein the first identification information comprises a first field, and the first field comprises at least one of:
a first subfield identifying an identifier for the M-AP coordination transmission scheduling;
a second subfield identifying a transmission start time of the M-AP coordination transmission scheduling; or
a third subfield identifying a transmission duration of the M-AP coordination transmission scheduling.

3. The communication method according to claim 1, wherein the first identification information comprises a second field, and the second field identifies one or more coordination transmission strategies supported by the M-AP coordination transmission scheduling.

4. The communication method according to claim 3, wherein the first identification information comprises a third field, and the third field identifies transmission strategy parameters of the one or more coordination transmission strategies.

5. The communication method according to any one of claims 1 to 4, wherein the first wireless frame is an action frame, and the first identification information is carried in an action field of the first wireless frame;
the action field further comprises at least one of:
a category subfield, an ultra high reliability (UHR) action subfield, or a dialogue token subfield,
wherein the category subfield identifies the first wireless frame as a UHR action frame;
the UHR action subfield is set to a first parameter value to identify the first wireless frame as an M-AP coordination scheduling notification frame;
the dialogue token subfield identifies a current session.

6. The communication method according to claim 1, after sending the first wireless frame, comprising:
receiving a second wireless frame sent by a second AP, wherein the second wireless frame comprises second identification information, and the second identification information identifies a target M-AP coordination transmission scheduling to which the second AP intends to join.

7. The communication method according to claim 6, wherein the second identification information comprises a fourth field, and the fourth field comprises a media access control (MAC) address of the first AP and an identifier for the target M-AP coordination transmission scheduling.

8. The communication method according to claim 6, wherein the second identification information comprises a fifth field, and the fifth field identifies the target M-AP coordination transmission strategy supported and accepted by the second AP.

9. The communication method according to claim 7 or 8, wherein the second wireless frame is an action frame, and the second identification information is carried in an action field of the second wireless frame;
the action field further comprises at least one of:
a category subfield, a UHR action subfield, or a dialogue token subfield,
wherein the category subfield identifies the second wireless frame as a UHR action frame;
the UHR action subfield is set to a second parameter value to identify that the second wireless frame is an M-AP coordination scheduling request frame or an M-AP coordination scheduling confirmation frame;
the dialogue token subfield identifies that a current session and the first wireless frame are the same session.

10. The communication method according to claim 7, after receiving the second wireless frame sent by the second AP, further comprising:
during a period from a transmission start time of the target M-AP coordination transmission scheduling to an end of a transmission duration, performing an M-AP coordination transmission operation with the second AP according to the target M-AP coordination transmission strategy.

11. The communication method according to claim 10, wherein the M-AP coordination transmission operation with the second AP comprises at least one of:
obtaining, by the first AP, a transmission occasion, and sending, by the first AP, a first M-AP coordination trigger frame to one or more second APs; and after receiving a response frame to the first M-AP coordination trigger frame from the one or more second APs, performing, by the first AP, an M-AP coordination operation with the responding second AP according to the transmission strategy parameters of the target M-AP coordination transmission strategy; or
receiving a second M-AP coordination trigger frame sent by the second AP, sending a response frame to the second M-AP coordination trigger frame to the second AP, and performing an M-AP coordination operation according to the transmission strategy parameters of the target M-AP coordination transmission strategy.

12. A communication method, comprising:
receiving, by a second access point device (AP), a first wireless frame sent by a first AP, wherein the first wireless frame comprises first identification information, and the first identification information identifies information for a multi-AP (M-AP) coordination transmission scheduling.

13. The communication method according to claim 12, wherein the first identification information comprises a first field, and the first field comprises at least one of:
a first subfield identifying an identifier for the M-AP coordination transmission scheduling;
a second subfield identifying a transmission start time of the M-AP coordination transmission scheduling; or
a third subfield identifying a transmission duration of the M-AP coordination transmission scheduling.

14. The communication method according to claim 12, wherein the first identification information comprises a second field, and the second field identifies one or more coordination transmission strategies supported by the M-AP coordination transmission scheduling.

15. The communication method according to claim 14, wherein the first identification information comprises a third field, and the third field identifies transmission strategy parameters of the one or more coordination transmission strategies.

16. The communication method according to any one of claims 12 to 15, wherein the first wireless frame is an action frame, and the first identification information is carried in an action field of the first wireless frame;
the action field further comprises at least one of:
a category subfield, an ultra high reliability (UHR) action subfield, or a dialogue token subfield,
wherein the category subfield identifies the first wireless frame as a UHR action frame;
the UHR action subfield is set to a first parameter value to identify the first wireless frame as an M-AP coordination scheduling notification frame;
the dialogue token subfield identifies a current session.

17. The communication method according to claim 12, after receiving the first wireless frame sent by the first AP, comprising:
sending a second wireless frame to a second AP, wherein the second wireless frame comprises second identification information, and the second identification information identifies a target MAP coordination transmission scheduling to which the second AP intends to join.

18. The communication method according to claim 17, wherein the second identification information comprises a fourth field, and the fourth field comprises a media access control (MAC) address of the first AP and an identifier for the target M-AP coordination transmission scheduling.

19. The communication method according to claim 17, wherein the second identification information comprises a fifth field, and the fifth field identifies the target M-AP coordination transmission strategy supported and accepted by the second AP.

20. The communication method according to claim 18 or 19, wherein the second wireless frame is an action frame, and the second identification information is carried in an action field of the second wireless frame;
the action field further comprises at least one of:
a category subfield, a UHR action subfield, or a dialogue token subfield,
wherein the category subfield identifies the second wireless frame as a UHR action frame;
the UHR action subfield is set to a second parameter value to identify that the second wireless frame is an M-AP coordination scheduling request frame or an M-AP coordination scheduling confirmation frame;
the dialogue token subfield identifies that a current session and the first wireless frame are the same session.

21. The communication method according to claim 19, after sending the second wireless frame to the first AP, further comprising:
during a period from a transmission start time of the target M-AP coordination transmission scheduling to an end of a transmission duration, performing an M-AP coordination transmission operation with the first AP according to the target M-AP coordination transmission strategy.

22. The communication method according to claim 21, wherein the M-AP coordination transmission operation with the first AP comprises at least one of:
receiving a first M-AP coordination trigger frame sent by the first AP, sending a response frame to the first M-AP coordination trigger frame to the first AP, and performing an M-AP coordination operation according to the transmission strategy parameters of the target M-AP coordination transmission strategy; or
obtaining, by the second AP, a transmission occasion, and sending, by the second AP, a second M-AP coordination trigger frame to the first AP; and after receiving, from the first AP, a response frame to the second M-AP coordination trigger frame, performing, by the second AP, an M-AP coordination operation according to the transmission strategy parameters of the target M-AP coordination transmission strategy.

23. An access point device, wherein the access point device is a first access point device and comprises:
a determining module configured to determine a first wireless frame, wherein the first wireless frame comprises first identification information, and the first identification information identifies information for a multi-AP (M-AP) coordination transmission scheduling; and
a sending module configured to send the first wireless frame.

24. An access point device, wherein the access point device is a second access point device and comprises:
a first receiving module configured to receive a first wireless frame, wherein the first wireless frame comprises first identification information, and the first identification information identifies information for a multi-AP (M-AP) coordination transmission scheduling.

25. An access point device, wherein the access point device is a first access point device or a second access point device, and comprises:
one or more processors,
wherein the access point device is configured to perform the communication method according to any one of claims 1 to 11 or any one of claims 12 to 22.

26. A communication system, comprising:
a first access point device; and
a second access point device,
wherein the access point device is configured to implement the communication method according to any one of claims 1 to 11, and the access point device is configured to implement the communication method according to any one of claims 12 to 22.

27. A storage medium having stored therein instructions that, when run on a communication device, cause the communication device to perform the method according to any one of claims 1 to 11 or any one of claims 12 to 22.
